(19) **Europäisches Patentamt**

**European Patent Office**

**Office européen des brevets**

(11) **EP 1 273 211 B1**

(12) **EUROPÄISCHE PATENTSCHRIFT**

(45) Veröffentlichungstag und Bekanntmachung des Hinweises auf die Patenterteilung:
**10.11.2004 Patentblatt 2004/46**

(21) Anmeldenummer: **01931372.5**

(22) Anmeldetag: **16.03.2001**

(51) Int Cl.7: **H05B 41/298**

(86) Internationale Anmeldenummer:
**PCT/DE2001/001011**

(87) Internationale Veröffentlichungsnummer:
**WO 2001/069986 (20.09.2001 Gazette 2001/38)**

(54) **VERFAHREN UND SCHALTUNGSANORDNUNG ZUR ERZEUGUNG EINER ZÜNDSPANNUNG FÜR LEUCHTSTOFFLAMPEN**

METHOD AND CIRCUIT ARRANGEMENT FOR PRODUCING AN IGNITION VOLTAGE FOR FLUORESCENT LAMPS

PROCEDE ET MONTAGE PERMETTANT DE PRODUIRE UNE TENSION D'ALLUMAGE POUR DES LAMPES FLUORESCENTES

(84) Benannte Vertragsstaaten:
**AT BE CH CY DE DK ES FI FR GB GR IE IT LI LU MC NL PT SE TR**

(30) Priorität: **17.03.2000 DE 10013342**

(43) Veröffentlichungstag der Anmeldung:
**08.01.2003 Patentblatt 2003/02**

(73) Patentinhaber: **TRILUX-LENZE GmbH & Co. KG**
**D-59759 Arnsberg (DE)**

(72) Erfinder:
• **KEGGENHOFF, Ralf**
**59846 Sundern (DE)**
• **MERTENS, Ferdinand**
**59755 Arnsberg (DE)**

(74) Vertreter: **Lippert, Stachow, Schmidt & Partner**
**Frankenforster Strasse 135-137**
**51427 Bergisch Gladbach (DE)**

(56) Entgegenhaltungen:
EP-A- 0 727 921    EP-A- 0 871 347
DE-A- 19 900 153    US-A- 5 550 433
US-A- 5 925 990

**Beschreibung**

Die Erfindung betrifft ein Verfahren zur Erzeugung einer Zündspannung für eine Leuchtstofflampe, bei dem während des Startvorganges ein LC-Reihenschwingkreis mit einer Wechselspannung beaufschlagt wird, die eine Frequenz aufweist, die in der Größenordnung einer durch die am Reihenschwingkreis beteiligten Bauelemente bestimmten Resonanzfrequenz liegt. Die Spannung über einem Kondensator des LC-Reihenschwingkreises wird an die dem Kondensator parallel geschaltete Leuchtstofflampe zugeführt.

Die Erfindung betrifft auch eine Schaltungsanordnung zur Erzeugung einer Zündspannung für eine Leuchtstofflampe mit einem LC-Reihenschwingkreis und einem mit dem Schwingkreis verbundenen Wechselspannungsgenerator, wobei die Leuchtstofflampe zu einem Kondensator des LC-Reihenschwingkreises parallel geschaltet ist.

Ein eingangs genanntes Verfahren und eine eingangs genannte Schaltungsanordnung ist beispielsweise aus der europäischen Patentanmeldung 0 889 675 bekannt. Darin wird ein LC-Reihenschwingkreis mit einer hochfrequenten Wechselspannung beaufschlagt. Liegt diese Wechselspannung in der Resonanzfrequenz der am Reihenschwingkreis beteiligten Bauelemente, so entsteht an einem Kondensator des LC-Reihenschwingkreises eine Spannung, die der Zündspannung der zu dem Kondensator parallel geschalteten Leuchtstofflampe entspricht. Durch die Erzeugung dieser Zündspannung zündet die Leuchtstofflampe, wodurch der Startvorgang abgeschlossen ist. Danach liegt an der Leuchtstofflampe nur noch die für den Normalbetrieb erforderliche Spannung an.

Durch Bauteiltoleranzen der an dem Reihenschwingkreis beteiligten Bauelemente kann es jedoch zu deutlichen Abweichungen der Resonanzfrequenz des Schwingkreises kommen. Damit liegt die Frequenz der Wechselspannung während des Startvorganges (Startfrequenz) nicht mehr in der beabsichtigten Resonanz zu dem Reihenschwingkreis, wodurch es zu deutlichen Abweichungen der Zündspannungen kommen kann. Hierbei kann die Zündspannung entweder zu gering sein, wodurch die Lampe unter Umständen nicht zündet. Die Zündspannung kann aber auch zu hoch sein, was zur Zerstörung des Gerätes im Fehlerfall, beispielsweise bei einer defekten Lampe, führen kann.

Der Erfindung liegt somit die Aufgabe zugrunde, ein Verfahren und eine Schaltungsanordnung zur Erzeugung einer Zündspannung für Leuchtstofflampen anzugeben, bei dem die Sicherheit des Zündens erhöht und eine Überschreitung maximal zulässiger Zündspannungen vermieden wird.

Verfahrensseitig wird die Aufgabe dadurch gelöst, daß die Wechselspannung dem LC-Reihenschwingkreis über ein erstes Zeitintervall mit einer ersten Startfrequenz $f_1$ aufgeprägt wird. Nach dem ersten Zeitintervall wird die Spannung an der Leuchtstofflampe gemessen und mit einem Sollwert verglichen. Bei Erreichen des Sollwertes erfolgt ein Abbruch der Zündspannungserzeugung, wobei eine Spannung zum Normalbetrieb der Leuchtstofflampe angelegt wird. Diese Verfahrensschritte werden für ein n-tes Zeitintervall mit einer n-ten Startfrequenz, mit n=1 ... m, wiederholt, bis der Sollwert erreicht wird. Dabei entspricht die erste Startfrequenz $f_1$ einem durch die Toleranz der beteiligten Bauelemente bedingten größtmöglichen Wert der Resonanzfrequenz. Die m-te Startfrequenz $f_m$ entspricht einem durch die Toleranz der beteiligten Bauelemente bedingten kleinstmöglichen Wert der Resonanzfrequenz. Jede n-te Startfrequenz $f_n$ ist kleiner als ihre vorhergehende Startfrequenz $f_{n-1}$.

Durch eine Variation der Startfrequenzen der Wechselspannung, die an den L-C-Reihenschwingkreis angelegt wird, wird der mögliche Toleranzbereich der Resonanzfrequenz solange "durchfahren" bis der erforderliche Wert einer Zündspannung für die Leuchtstofflampe erreicht wird. Damit wird es vermieden, daß infolge fehlender Resonanz eine zu geringe Zündspannung entsteht und die Lampe nicht zündet. Andererseits wird es durch die Messung der Zündspannung und dem Sollwertvergleich vermieden, daß eine zu hohe Zündspannung, die ggf. zur Zerstörung des Gerätes führen kann, vermieden wird.

In einer günstigen Ausgestaltung der Erfindung ist vorgesehen, daß jede n-te Startfrequenz $f_n$ um einen Betrag $\Delta f$ kleiner ist als ihre vorhergehende Startfrequenz $f_{n-1}$. Dafür gilt

$$\Delta f = \frac{(f_1 - f_m)}{(m - 1)}$$

Durch diese Ausgestaltung der Erfindung wird die Frequenz um äquvidistante Größen verändert, wodurch eine optimale Anpassung erfolgen kann.

In einer weiteren Ausgestaltung des erfindungsgemäßen Verfahrens ist vorgesehen, daß die Meßempfindlichkeit bei der Messung der Spannung an der Leuchtstofflampe von einer geringen Meßempfindlichkeit bei dem Startvorgang und einer höheren Meßempfindlichkeit bei dem Normalbetrieb umgeschaltet wird.

Bei der Messung der Lampenspannung während des Startvorganges und des Normalbetriebes ergeben sich sehr große Spannungsamplituden. Wird diese Lampenspannung sodann mit der gleichen Meßempfindlichkeit gemessen, so hätte die Messung der Lampenspannung im Normalbetrieb, wo die Lampenspannung im Vergleich zum Startvorgang eine wesentlich geringere Amplitude aufweist, eine sehr schlechte Auflösung, was durch diese erfindungsgemäße Lösung vermieden wird.

Anordnungsseitig wird die Aufgabenstellung dadurch gelöst, daß der Wechselspannungsgenerator in seiner Frequenz von einer Steuereinheit steuerbar ist und das eine Meßschaltung mit der Steuereinheit verbunden ist.

Mit der Variationsmöglichkeit der Frequenz an dem Wechselspannungsgenerator kann eine in Abhängigkeit von der über die Meßschaltung erhaltenen Meßwerte der Lampenspannung erfolgen. Damit wird eine schrittweise Änderung der Startfrequenz erreicht, um auch bei größeren Bauelementedifferenzen überhaupt zu einer Zündspannung zu gelangen und auch eine maximal zulässige Zündspannung nicht zu überschreiten.

In einer zweckmäßigen Ausgestaltung der Schaltungssanordnung ist vorgesehen, daß die Steuereinheit einen Controller beinhaltet. Mittels eines derartigen Controllers kann in einfacher Art und Weise ein Auswerte- und Steuerprogramm zur Steuerung des Startfrequenzverlaufes realisiert werden.

In einer weiteren Ausgestaltung der erfindungsgemäßen Schaltungsanordnung ist vorgesehen, daß die Meßschaltung eine Meßbereichserweiterungsschaltung beinhaltet. Diese Meßbereichserweiterungsschaltung besteht aus einem Spannungsteiler mit einem ersten und einem zweiten Meßwiderstand. Dabei liegt die Eingangsspannung der Meßbereichserweiterungsschaltung über dem ersten und dem zweiten Meßwiderstand. Die Ausgangsspannung der Meßbereichserweiterungsschaltung liegt über dem zweiten Meßwiderstand. Dabei ist mindestens ein dritter Meßwiderstand vorgesehen, der dem zweiten Meßwiderstand mittels eines Schalters parallel zuschaltbar ist.

Durch ein Zuschalten des zweiten Meßwiderstandes wird eine Parallelschaltung aus zweitem und drittem Meßwiderstand erreicht, deren Gesamtwiderstand kleiner ist als der zweite Meßwiderstand. Damit wird bei gleicher Eingangsspannung eine geringere Ausgangsspannung erzielt. Das heißt sollen sehr große Amplituden als Eingangspannung gemessen werden, so wird der dritte Meßwiderstand zugeschalten, die Ausgangsspannung also um einen durch die Meßwiderstände definierten Betrag gedämpft. Sollen geringere Amplituden als Eingangsspannung gemessen werden, so wird über den Schalter diese Parallelschaltung aufgehoben, wodurch die Ausgangsspannung ungedämpft ist. Folglich kann die Ausgangsspannung immer in der gleichen Größenordnung der Amplitude liegen und somit mit gleichen Auflösung gemessen werden.

In einer zweckmäßigen Ausgestaltung ist vorgesehen, daß der Schalter durch einen zusätzlichen Ausgang des Controllers ausgebildet ist. Hierfür wird ein sogenanntes Portpin benutzt, was bei entsprechender Ansteuerung durch den Controller beispielsweise ein Durchschalten auf Masse realisiert. Damit kann, durch den Controller gesteuert, eine Meßbereichsumgestaltung erfolgen, sobald dieser beispielsweise einen Unterschied zwischen der Lampenspannung im Startvorgang und im Normalbetrieb detektiert.

Die Erfindung soll nachfolgend an Hand eines Ausführungsbeispieles näher erläutert werden. In den zugehörigen Zeichnungen zeigt

Fig. 1    eine Prinzipdarstellung einer erfindungsgemäßen Schaltungsanordnung,

Fig. 2    eine prinzipielle Darstellung einer Meßbereichserweiterungsschaltung,

Fig. 3    eine Meßbereichserweiterungsschaltung unter Nutzung eines Controllers und

Fig. 4    einen Ablauf des erfindungsgemäßen Verfahrens.

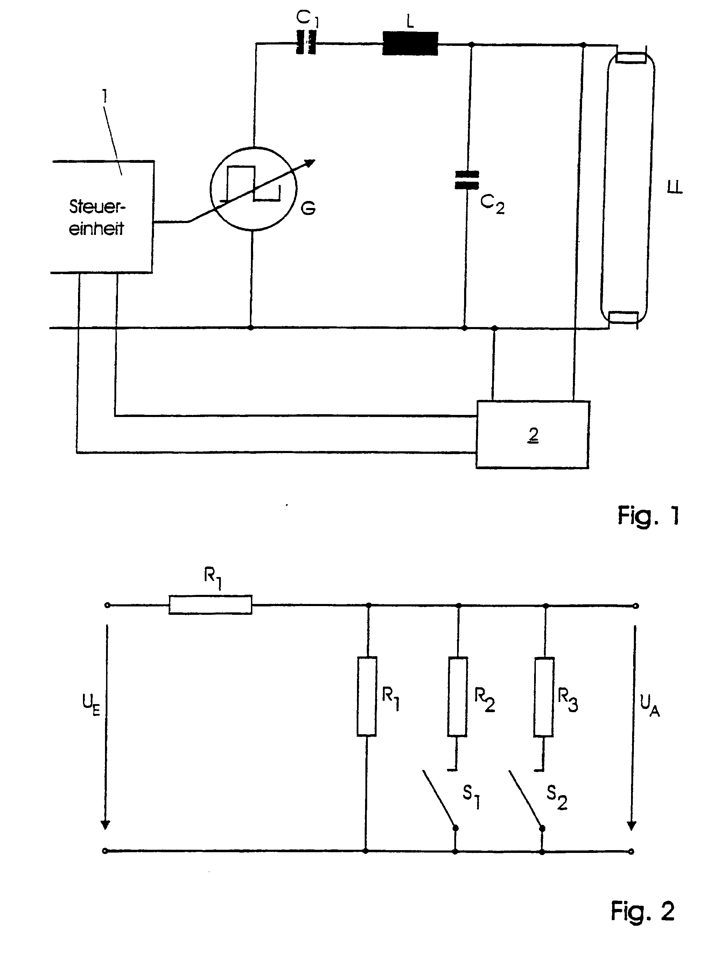

wie in Fig. 1 dargestellt, weist eine erfindungsgemäße Schaltungsanordnung einen LC-Reihenschwingkreis mit einem ersten Kondensator C1, einen zweiten Kondensator C2 und einer Induktivität L auf. Dem zweiten Kondensator C2 ist die Leuchtstofflampe LL parallel geschaltet. Weiterhin ist der LC-Reihenschwingkreis mit einem Wechselspannungsgenerator G verbunden. Der Wechselspannungsgenerator G ist in seiner Frequenz von einer Steuereinheit 1 steuerbar. Zur Messung der Spannung über der Leuchtstofflampe LL ist eine Meßschaltung 2 vorgesehen, die mit der Steuereinheit 1 verbunden ist.

Die Meßschaltung 2 beinhaltet eine Meßbereichserweiterungsschaltung, wie sie prinzipiell in Fig. 2 dargestellt ist. Die Meßbereichserweiterungsschaltung besteht aus einem Spannungsteiler mit einem ersten Meßwiderstand $R_1$ und einem zweiten Meßwiderstand $R_2$. Dabei liegt die Eingangsspannung $U_E$ über dem ersten Meßwiderstand $R_1$ und dem zweiten Meßwiderstand $R_2$ an. Die Ausgangsspannung $U_A$ liegt über dem zweiten Meßwiderstand. wie in Fig. 2 weiterhin dargestellt, ist ein dritter Meßwiderstand $R_3$ und ein vierter Meßwiderstand $R_4$ vorgesehen. Der dritte Meßwiderstand $R_3$ ist über einen Schalter $S_1$ und der vierte Meßwiderstand $S_2$ zu dem zweiten Meßwiderstand $R_2$ parallel zuschaltbar.

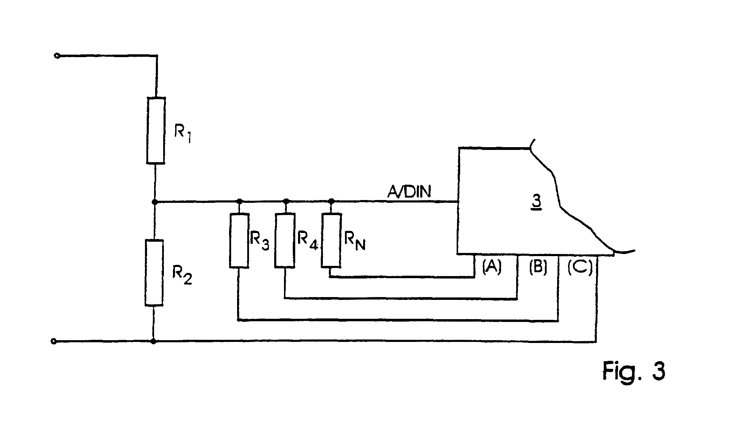

Wie in Fig. 3 dargestellt, können auch mehrere weitere Meßwiderstände $R_N$ angeordnet sein.

Wenn in Fig. 2 die Zuschaltung der Meßwiderstände $R_3$ und $R_4$ noch über Schalter dargestellt war, so ist in Fig. 3 ein Controller 3 eingesetzt, dessen Portpins B und C die Schalter $S_1$ und $S_2$ ersetzen. In gleicher Weise ersetzt Portpin A ggf. weitere Schalter für weitere Meßwiderstände $R_N$.

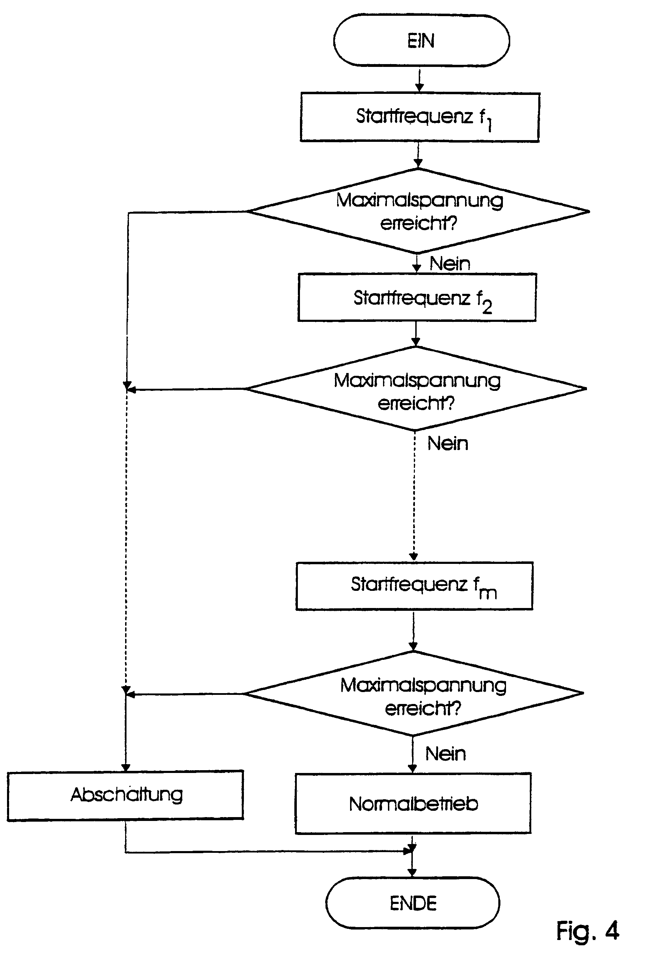

Wie in Fig. 4 dargestellt, wird nach einem Einschalten zunächst eine erste Startfrequenz $f_1$ über die Steuereinheit 1 an dem Wechselspannungsgenerator G eingestellt. Damit stellt sich eine Lampenspannung über die Leuchtstofflampe LL ein, die von der Meßschaltung 2 gemessen wird. In der Steuereinheit 1 erfolgt dann ein Vergleich mit einem Sollwert der Maximalspannung über der Leuchtstofflampe LL. Ist diese Maximalspannung noch nicht erreicht, so wird an dem Wechselspannungsgenerator G eine zweite Startfrequenz $f_2$, die ge-

ringer ist als die erste Startfrequenz $f_1$, eingestellt. Ist bereits nach der Startfrequenz $f_1$ die Maximalspannung erreicht, erfolgt allerdings eine Abschaltung des Startvorganges. Anderenfalls wird die Lampenspannung gemessen und wiederum ein vergleich angestellt, ob die Spannung den Sollwert, d. h. die Maximalspannung erreicht hat. Ist dies der Fall, wird wiederum der Startvorgang abgeschaltet. Ist die nicht der Fall, so wird die Startfrequenz weiter gesenkt. Dies wird bis zu einer Startfrequenz $f_m$ wiederholt. wird die Maximalspannung auch nach Einstellen der letzten Startfrequenz $f_m$ nicht erreicht, so wird in diesem Ausführungsbeispiel zum Normalbetrieb übergegangen. Das erfindungsgemäße Verfahren ist damit beendet.

**Bezugszeichenliste**

| | |
|---|---|
| $C_1$ | erster Kondensator |
| $C_2$ | zweiter Kondensator |
| L | Induktivität |
| LL | Leuchtstofflampe |
| G | Wechselspannungsgenerator |
| $R_1$ | erster Meßwiderstand |
| $R_2$ | zweiter Meßwiderstand |
| $R_3$ | dritter Meßwiderstand |
| $R_4$ | vierter Meßwiderstand |
| $R_N$ | weitere Meßwiderstände |
| $S_1$ | erster Schalter |
| $S_2$ | zweiter Schalter |
| $U_E$ | Eingangsspannung |
| $U_A$ | Ausgangsspannung |
| A | Portpin |
| B | Portpin |
| C | Portpin |
| 1 | Steuereinheit |
| 2 | Meßschaltung |
| 3 | Controller |

**Patentansprüche**

1. Verfahren zur Erzeugung einer Zündspannung für eine Leuchtstofflampe, bei dem während des Startvorganges ein LC-Reihenschwingkreis mit einer wechselspannung beaufschlagt wird, die eine Frequenz aufweist, die in der Größenordnung einer durch die am Reihenschwingkreis beteiligten Bauelemente bestimmten Resonanzfrequenz liegt, und die Spannung über einem Kondensator des LC-Reihenschwingkreises an die dem Kondensator parallelgeschaltete Leuchtstofflampe zugeführt wird, **dadurch gekennzeichnet, daß** die Wechselspannung dem LC-Reihenschwingkreis über ein erstes Zeitintervall mit einer ersten Startfrequenz $f_1$ aufgeprägt wird, daß nach dem ersten Zeitintervall die Spannung an der Leuchtstofflampe (LL) gemessen und mit einem Sollwert verglichen wird, daß bei Erreichen des Sollwertes ein Abbruch der zündspannungserzeugung erfolgt, daß dies für ein n-tes Zeitintervall mit einer n-ten Startfrequenz $f_n$, mit n = 2 ... m, wiederholt wird, wobei die erste Startfrequenz $f_1$ einem durch die Toleranz der beteiligten Bauelemente (C1; L; C2; LL) bedingten größtmöglichen Wert der Resonanzfrequenz und die m-te Startfrequenz $f_m$ einem durch die Toleranz der beteiligten Bauelemente (C1; L; C2; LL) bedingten kleinstmöglichen Wert der Resonanzfrequenz entspricht und jede n-te Startfrequenz $f_n$ kleiner ist als ihre vorhergehende Startfrequenz $f_{n-1}$.

2. Verfahren nach Anspruch 1, **dadurch gekennzeichnet, daß** jede n-te Startfrequenz $f_n$ um einen Betrag $\Delta f$ kleiner ist als ihre vorhergehende Startfrequenz $f_{n-1}$, für den gilt $\Delta f=( f_1-f_m) \cdot 1/ (m-1)$ .

3. Verfahren nach Anspruch 1 oder 2, **dadurch gekennzeichnet, daß** die Meßempfindlichkeit bei der Messung der Spannung an der Leuchtstofflampe (LL) von einer geringen Meßempfindlichkeit bei dem Startvorgang und einer höheren Meßempfindlichkeit bei dem Normalbetrieb umgeschaltet wird.

4. Schaltungsanordnung zur Erzeugung einer Zündspannung für eine Leuchtstofflampe, insbesondere zur Ausführung eines Verfahrens nach einem der Ansprüche 1 bis 3, mit einem LC-Reihenschwingkreis und einem mit dem Schwingkreis verbundenen Wechselspannungsgenerator zur Erzeugung einer Wechselspannung mit einer Frequenz, die in der Größenordnung einer durch die am Reihenschwingkreis beteiligten Bauelemente bestimmten Resonanzfrequenz liegt, wobei die Leuchtstofflampe zu einem Kondensator des LC-Reihenschwingkreises parallel geschaltet ist und die Spannung über den parallel geschalteten Kondensator an die Leuchtstofflampe zugeführt ist, der Wechselspannungsgenerator in seiner Frequenz von einer Steuereinheit gesteuert und eine Messschaltung mit der Steuereinheit verbunden ist, **dadurch gekennzeichnet, dass** über ein erstes Zeitintervall eine Wechselspannung dem LC-Reihenschwingkreis mit einer ersten Startfrequenz $f_1$ aufgeprägt ist, wobei diese Startfrequenz einen durch die Toleranz der beteiligten Bauelemente (C1, L, C2, LL) bedingten größtmöglichen Wert der Resonanzfrequenz entspricht und nach dem ersten Zeitintervall über die Messschaltung (2) die Spannung an der Leuchtstofflampe (LL) messbar ist, und für nachfolgende Zeitintervalle eine Wechselspannung mit einer niedrigeren Startfrequenz bis zum Erreichen einer n-ten Startfrequenz $f_n$ aufgeprägt ist, die einem durch die Toleranz der beteiligten Bauelemente (C1, L, C2, LL) bedingten kleinstmöglichen Wert der Resonanzfre-. quenz entspricht, wobei nach dem Erreichen eines Sollwertes der Lampenspannung ein Abbruch der Zündspannungserzeugung erfolgt.

5.  Schaltungsanordnung nach Anspruch 4, **dadurch gekennzeichnet, daß** die Steuereinheit (1) einen Controller (3) beinhaltet.

6.  Schaltungsanordnung nach Anspruch 4 oder 5, **dadurch gekennzeichnet, daß** die Meßschaltung (2) eine Meßbereichserweiterungsschaltung beinhaltet, die aus einem Spannungsteiler mit einem ersten ($R_1$) und einem zweiten Meßwiderstand ($R_2$) besteht, wobei die Eingangsspannung ($U_E$) über dem ersten ($R_1$) und dem zweiten ($R_2$) und die Ausgangsspannung ($U_A$) über dem zweiten Meßwiderstand ($R_2$) liegt und mindestens ein dritter Meßwiderstand ($R_3$) vorgesehen ist, der dem zweiten Meßwiderstand ($R_2$) mittels eines Schalters ($S_1$) parallel zuschaltbar ist.

7.  Schaltungsanordnung nach Anspruch 6, **dadurch gekennzeichnet, daß** der Schalter ($S_1$; $S_2$) durch einen zusätzlichen Ausgang (A; B; C) des Controllers (3) ausgebildet ist.

**Claims**

1.  A method for generating a starting voltage for a fluorescent lamp, in which during the starting process there is applied to an LC series resonant circuit an alternating voltage having a frequency that lies in the order of magnitude of a resonant frequency determined by the components involved in the series resonant circuit, and the voltage is supplied by way of a capacitor of the LC series resonant circuit to the fluorescent lamp connected in parallel with the capacitor, **characterised in that** the alternating voltage is impressed with a first starting frequency $f_1$ on the LC series resonant circuit over a first time interval, **in that** after the first time interval the voltage is measured at the fluorescent lamp (LL) and is compared with a setpoint value, **in that**, on reaching the setpoint value, generation of the starting voltage is discontinued, **in that** this is repeated for an $n^{th}$ time interval with an $n^{th}$ starting frequency $f_n$, where n = 2 ... m, wherein the first starting frequency $f_1$ corresponds to the maximum possible value of the resonant frequency caused by the tolerance of the components involved (C1; L; C2; LL) and the $m^{th}$ starting frequency $f_m$ corresponds to the smallest possible value of the resonant frequency caused by the tolerance of the components involved (C1; L; C2; LL) and each $n^{th}$ starting frequency $f_n$ is less than its preceding starting frequency $f_{n-1}$.

2.  A method according to claim 1, **characterised in that** each $n^{th}$ starting frequency $f_n$ is smaller by an amount $\Delta f$ than its preceding starting frequency $f_{n-1}$, for which $\Delta f = (f_1 = f_m) \cdot 1/(m-1)$ is valid.

3.  A method according to claim 1 or 2, **characterised in that** the measuring sensitivity when measuring the voltage at the fluorescent lamp (LL) changes from a low measuring sensitivity during the starting process to a higher measuring sensitivity during normal operation.

4.  A circuit arrangement for generating a starting voltage for a fluorescent lamp, especially for carrying out a method according to any one of claims 1 to 3, having an LC series resonant circuit and connected to the resonant circuit an alternating voltage generator for generating an alternating voltage having a frequency that lies in the order of magnitude of a resonant frequency determined by the components involved in the series resonant circuit, wherein the fluorescent lamp is connected in parallel with a capacitor of the LC series resonant circuit and the voltage is supplied by way of the parallel connected capacitor to the fluorescent lamp, the alternating voltage generator is controlled in respect of its frequency by a control unit and a measuring circuit is connected with the control unit, **characterised in that** over a first time interval an alternating voltage is impressed with a first starting frequency $f_1$ on the LC series resonant circuit, wherein this starting frequency corresponds to the maximum possible value of the resonant frequency caused by the tolerance of the components involved (C1; L; C2; LL), and after the first time interval the voltage at the fluorescent lamp (LL) is measurable by way of the measuring circuit (2), and for subsequent time intervals an alternating voltage having a lower starting frequency is impressed until an $n^{th}$ starting frequency $f_n$ that corresponds to the smallest possible value of the resonant frequency caused by the tolerance of the components involved (C1; L; C2; LL) is reached, wherein, after a setpoint value of the lamp voltage has been reached, generation of the starting voltage is discontinued.

5.  A circuit arrangement according to claim 4, **characterised in that** the control unit (1) contains a controller (3).

6.  A circuit arrangement according to claim 4 or 5, **characterised in that** the measuring circuit (2) contains a measuring range extension circuit, which comprises a voltage divider having a first ($R_1$) and a second measuring resistor ($R_2$), the input voltage ($U_E$) lying across the first ($R_1$) and the second measuring resistor ($R_2$) and the output voltage ($U_A$) lying across the second measuring resistor ($R_2$) and at least a third measuring resistor ($R_3$) that can be

connected in parallel with the second measuring resistor ($R_2$) by means of a switch ($S_1$) being provided.

7. A circuit arrangement according to claim 6, **characterised in that** the switch ($S_1$; $S_2$) is formed by an additional output (A; B; C) of the controller (3).

## Revendications

1. Procédé pour produire une tension d'allumage destinée à une lampe fluorescente dans lequel, pendant le processus de démarrage, un circuit résonant série LC imprimé reçoit une tension alternative présentant une fréquence qui se situe dans l'ordre de grandeur d'une fréquence de résonance déterminée par les composants intervenant au niveau du circuit résonant série LC imprimé et la tension est amenée, par le biais d'un condensateur du circuit résonant série LC imprimé, au niveau de la lampe fluorescente connectée en parallèle au condensateur, **caractérisé en ce que** la tension alternative est appliquée au circuit résonant série LC imprimé, sur un premier intervalle de temps, avec une première fréquence de démarrage $f_1$, **en ce qu'**après le premier intervalle de temps, la tension est mesurée au niveau de la lampe fluorescente (LL) et comparée à une valeur théorique, **en ce que**, une fois la valeur théorique atteinte, la production de tension d'allumage est interrompue, **en ce que** cette action est répétée pour un n-intervalle de temps avec une n-fréquence de démarrage $f_n$, n étant égal à 2 ... m, sachant que la première fréquence de démarrage $f_1$ correspond à une valeur de la fréquence de résonance, la plus grande possible et définie par la tolérance des composants intervenant (C1, L, C2, LL), que la m-fréquence de démarrage $f_m$ correspond à une valeur de la fréquence de résonance, la plus petite possible et déterminée par la tolérance des éléments intervenant (C1, L, C2, LL) et que chaque n-fréquence de démarrage $f_n$ est inférieure à sa précédente fréquence de démarrage $f_{n-1}$.

2. Procédé selon la revendication 1, **caractérisé en ce que** chaque n-fréquence de démarrage $f_n$ est inférieure d'une valeur $\Delta f$, pour laquelle $\Delta f = (f_1-f_m).1/(m-1)$, à sa précédente fréquence de démarrage $f_{n-1}$.

3. Procédé selon la revendication 1 ou 2, **caractérisé en ce que** la sensibilité de mesurage, à l'occasion du mesurage de la tension au niveau de la lampe fluorescente (LL), est commutée par une sensibilité de mesurage faible lors du processus de démarrage et par une sensibilité de mesurage plus élevée en fonctionnement normal.

4. Montage pour produire une tension d'allumage destinée à une lampe fluorescente, en particulier pour réaliser un procédé selon l'une quelconque des revendications 1 à 3, avec un circuit résonant série LC imprimé et un générateur de tension alternative relié au circuit résonant, pour produire une tension alternative avec une fréquence qui se situe dans l'ordre de grandeur d'une fréquence de résonance déterminée par les composants intervenant au niveau du circuit résonant série, sachant que la lampe fluorescente est montée en parallèle à un condensateur du circuit résonant série LC imprimé et que la tension est amenée, par le biais du condensateur monté en parallèle, à la lampe fluorescente, que le générateur de tension alternative est commandé à sa fréquence par une unité de commande et qu'un circuit de mesure est relié à l'unité de commande, **caractérisé en ce qu'**une tension alternative est appliquée au circuit résonant série LC imprimé, sur un premier intervalle de temps, avec une première fréquence de démarrage $f_1$, sachant que cette fréquence de démarrage correspond à une valeur de la fréquence de résonance, la plus grande possible et déterminée par la tolérance des composants intervenant (C1, L, C2, LL), qu'après le premier intervalle de temps, la tension peut être mesurée au niveau de la lampe fluorescente (LL) par le biais du circuit de mesure (2) et que pour des intervalles de temps ultérieurs, une tension alternative est appliquée avec une fréquence de démarrage plus basse, et ce, jusqu'à atteindre une n-fréquence de démarrage $f_n$ qui correspond à une valeur de la fréquence de résonance, la plus petite possible et déterminée par la tolérance des composants intervenant (C1, L, C2, LL), sachant que la production de la tension d'allumage est interrompue une fois qu'une valeur théorique de la tension de la lampe est atteinte.

5. Montage selon la revendication 4, **caractérisé en ce que** l'unité de commande (1) contient une unité de contrôle (3).

6. Montage selon la revendication 4 ou 5, **caractérisé en ce que** le circuit de mesure (2) comprend un circuit d'expansion de zone de mesure, composé d'un diviseur de tension avec une première ($R_1$) et une deuxième ($R_2$) résistance de mesure, sachant que la tension d'entrée ($U_E$) est au-dessus de la première résistance de mesure ($R_1$) et de la deuxième résistance ($R_2$) et la tension de sortie ($U_A$), au-dessus de la deuxième résistance de mesure ($R_2$) et qu'il est prévu au moins une troisième résistance de mesure ($R_3$) qui peut être montée en parallèle à la deuxième résistance de mesure ($R_2$) au moyen d'un commutateur ($S_1$).

7. Montage selon la revendication 6, **caractérisé en ce que** le commutateur ($S_1$, $S_2$) est formé par une

**EP 1 273 211 B1**

sortie supplémentaire (A, B, C) de l'unité de contrôle (3).

Fig. 1

Fig. 2

Fig. 3

Fig. 4